# EUROPEAN PATENT APPLICATION

(11) **EP 1 840 723 A2**
(43) Date of publication of application: **03.10.2007**
(21) Application number: 06256328.3
(22) Date of filing: 12.12.2006
(51) Int. Cl.: G06F 3/06

(54) **Remote mirroring method between tiered storage systems**

(30) Priority: 28.03.2006 US 390396
(71) Applicant: HITACHI, LTD., Chiyoda-ku Tokyo 100-8280 (JP)
(72) Inventor: Mimatsu, Yasuyuki c/o Hitachi, Ltd, Intellectual Property Group, Chiyoda-ku, Tokyo 100-8220 (JP)
(74) Representative: Hodsdon, Stephen James

(57) **Abstract**

A method and system are provided in which files copied from a local storage system (10008) to a remote storage system (10108) are copied in such a manner that they reflect the arrangement and hierarchy of those files in the local storage system, including storage class. This allows the remote storage system to provide the desired properties and performance for the files in the same manner as the local storage system. Further, in the case where a file in the local storage system is migrated from one storage class to another storage class, the local storage system sends a migration command to the remote storage system. The migration command includes the target storage class to which the corresponding file in the remote storage system is to be migrated.

## Description

The present invention relates to a system and method for managing a storage system. In particular, the present invention relates to a system and method for managing the location of files copied between tiered storage systems.

U.S. Patent Publication No. 2004/0193760 to Matsunami et al. discloses a storage device which migrates data among storage classes which form a storage hierarchy in the storage device. The entire disclosure of this publication is hereby incorporated by reference. According to the storage system disclosed in this publication, files are deployed in a storage hierarchy defining different storage classes in a manner so that the storage system can provide appropriate performance, reliability and other properties for each file.

However, if a local storage system copies its files to a remote storage system, such as in a remote mirroring arrangement, the storage class of the copied files in the storage hierarchy of the remote storage system may not always be the same as that in the local storage system. Thus, if there is a failure at the local storage system, and the remote storage system takes over operation for the local storage system, files will not necessarily be provided with the same hierarchy. This can cause degraded performance, reliability, and other problems since the remote storage system cannot provide desired properties and performance for each file.

According to one aspect of the present invention, a method and system are provided in which files copied in a remote storage system are copied in such a manner that they reflect the arrangement of those files in a local storage system. This allows the remote storage system to provide the desired properties for the files in the same manner as the local storage system.

Further, each storage system may maintain information about the storage class of each file. When a file is written to a local storage system, and is copied to a remote storage system, information about the storage classification of the copied file is also sent. The remote storage system can then deploy the file in a storage hierarchy based on the information so as to deploy files in a manner similar to the local storage system.

Preferably, if the storage class of a file in a local storage system is modified, such as when a file is migrated from one storage area of one storage class to another storage area of another storage class, the local storage system sends a command to the remote storage system so that a copy of the migrated file in the remote storage system may also be migrated to a corresponding storage class in the remote storage system.

These and other objects, features and advantages of the present invention will become more apparent in view of the detailed description of the preferred embodiments in conjunction with the drawings.

### BRIEF DESCRIPTION OF THE DRAWINGS

FIG. 1 illustrates an overview of a computer storage system in which the method and apparatus of the present embodiments are applied.
FIG. 2 illustrates the local storage system or remote storage system in more detail.
FIG. 3 illustrates an example of a block table according to the present invention.
FIG. 4 illustrates an example of a file system table according to the present invention.
FIG. 5 illustrates an example of a file table according to the present invention.
FIG. 6 is a flowchart illustrating the process performed by the storage control program for writing a file in the local storage system.
FIG. 7 is a flowchart illustrating how copied data is received in the remote storage system.
FIG. 8 is a flowchart illustrating a process of data migration in the local storage system.
FIG. 9 is a flowchart illustrating a process of data migration in the remote storage system.
FIG. 10 illustrates a modified format of a file table.
FIG. 11 is a flow chart illustrating the process flow of the storage control program in the local storage system according to the second embodiment.
FIG. 12 is a flowchart illustrating the process flow of the storage control program in the remote storage system according to the second embodiment.
FIG. 13 is a flowchart illustrating how the storage control program handles a request to access a "migrated" file.

### First Embodiment

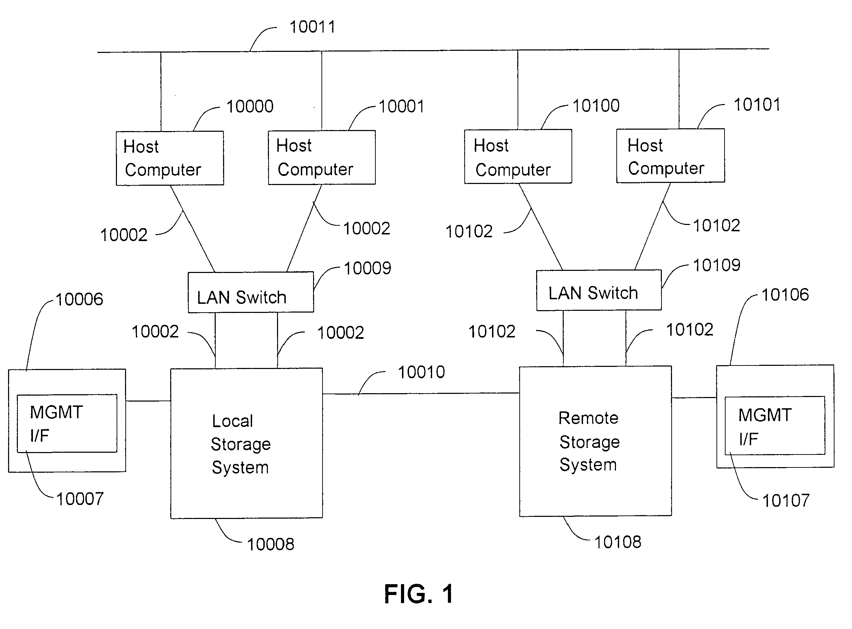

FIG. 1 illustrates an overview of a computer storage system in which the method and apparatus of the present embodiments are applied. In FIG. 1, host computers 10000, 10001 are connected to a local storage system 10008 via a LAN switch 10009 and LAN cables 10002. Host computers 10000 and 10001 read and write data from the local storage system 10008 through the LAN switch 10009. An administrator or storage management program of a management server 10006 controls the local storage system 10008. The management server 10006 has a management interface 10007 to allow an administrator to communicate with the local storage system 10008.

FIG. 1 also shows a remote storage system 10108 connected to host computers 10100 and 10101 via a LAN switch 10109 and LAN cables 10102. A management server 10106 has a management interface 10107, which both function in a manner similar to the management server 10006 and management interface 10007, but are connected to the remote storage system 10108. The local storage system 10008 and the remote storage system 10108 are coupled by a network 10010. The local storage system 10008 copies its files to the remote storage system 10108 in order to provide redundancy if there is any failure at the local storage system 10008. Further, an IP network 10011 allows host computers to connect with one another so that the remote host computers 10100. and 10101 can take over for local host computers 10000 and 10001, if needed.

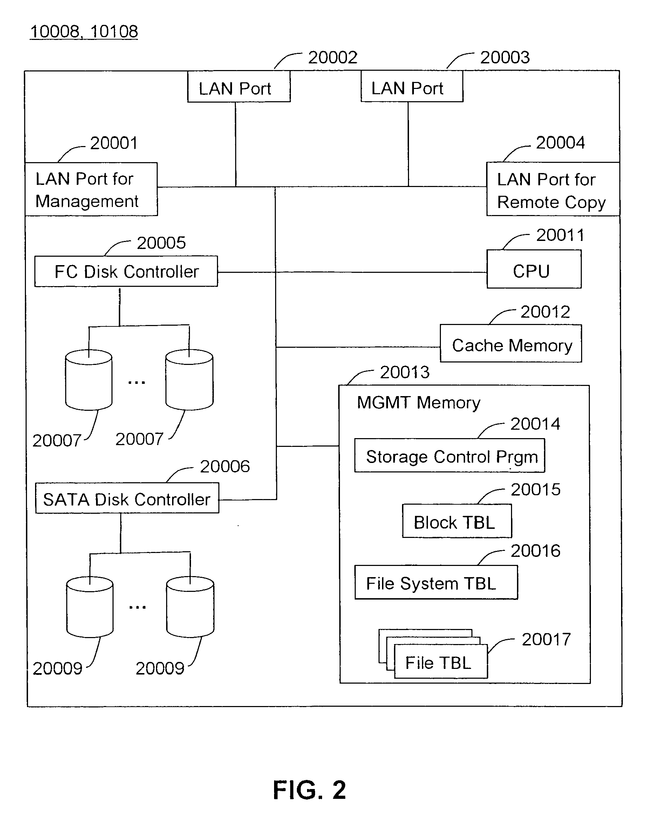

FIG. 2 illustrates more details of the local storage system 10008 and remote storage system 10108. Each storage system 10008, 10108 includes a LAN port 20001 for communication with management interface 10007, 10107, respectively, LAN ports 20002, 20003 for communication with the hosts 10000-10101, and LAN port 20004 for remote copy functions. A CPU 20011, a cache memory 20012, and a management memory 20013 may also be included in storage systems 10008, 10108, as is known in the art. Data from the host computers or the disk drives is stored temporarily in cache memory 20012 to shorten response time and increase throughput during I/O operations.

As shown in FIG. 2, CPU 20011 executes a storage control program 20014 stored in management memory 20013. The storage control program 20014 processes input/output (I/O) requests sent from host computers 10000-10101, manages the deployment of files, and communicates with management consoles 10006, 10106 of FIG. 1. A fibre channel (FC) disk controller 20005 controls I/O from/to FC disk drives 20007. FC disk drives are generally more expensive and can provide high-performance to host computers. On the other hand, low cost Serial Advanced Technology Attachment (SATA) disk drives such as SATA disk drives 20009 are also employed in storage systems 10008, 10108, and are connected to a SATA disk controller 20006. SATA disk drives can provide larger capacity at a much lower cost when compared with FC disk drives. However, SATA disk drives generally provide lower performance and reliability than FC disk drives. According to this embodiment, each type of disk drives (i.e., FC or SATA) corresponds to a different storage class.

Management memory 20013 also may contain three tables that are used by the storage control program 20014 to manage files. These three tables are the block table 20015, the file system table 20016 and the file table 20017. Further, while storage control program 20014 and tables 20015-20017 are preferably stored in memory 20013, they may also be stored and accessed in other computer readable mediums.

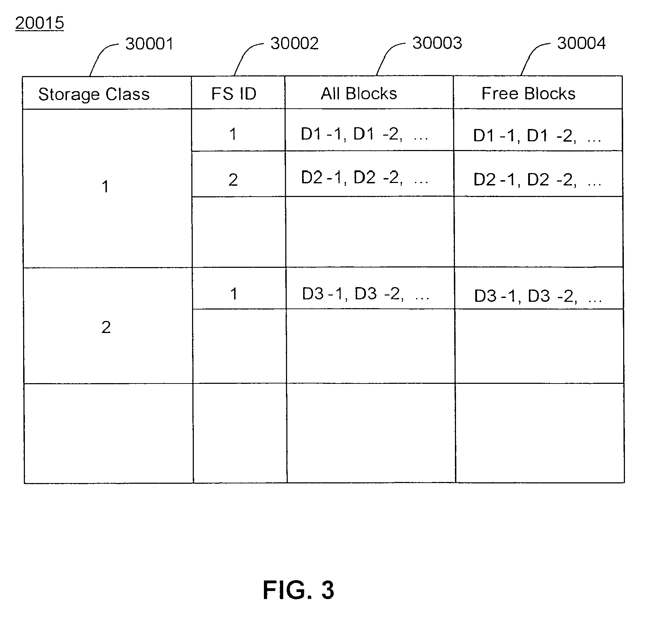

The block table 20015 is shown in more detail in FIG. 3. This table contains all the information about all disk blocks in a storage system, and is used for managing which blocks are used for which file system. Each line contains a storage class 30001, ID of the file system (FS ID) 30002, a list of block IDs of all blocks 30003, having the disk number and logical block number of all blocks in the file system, and a list of block IDs of free blocks 30004 which are blocks that are assigned but not used to store files. In the example of the figure, storage class 1 is shown to have file system IDs 1 and 2 and disks D1 and D2, while storage class 2 is shown to have a file system ID 1 and disks D3.

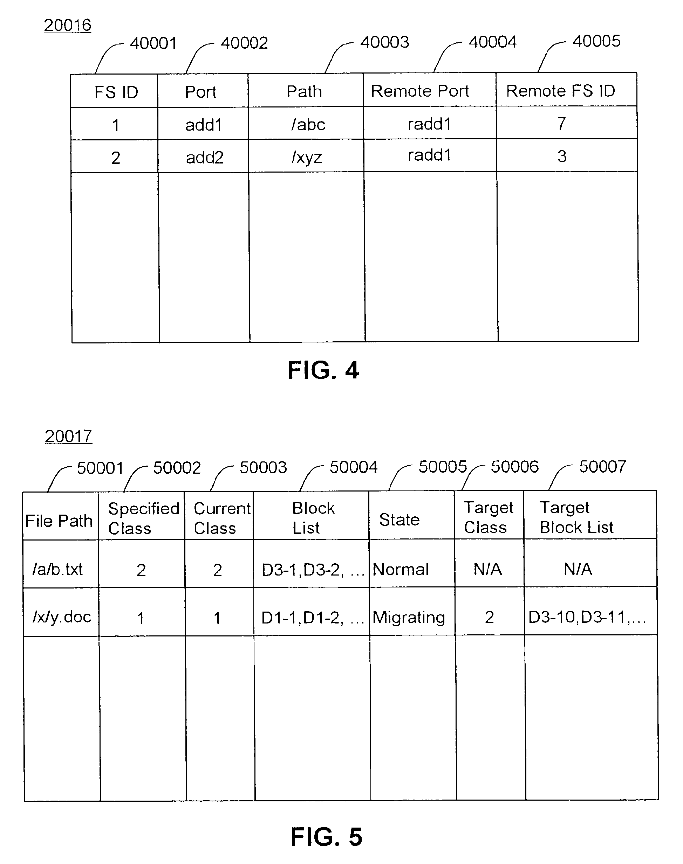

FIG. 4 illustrates the file system table 20016 which contains information about all of the file systems in the storage system. This table includes a file system ID 40001, the IP address of the LAN port 40002 from which the file system is exported, the path 40003 with which the file system is exported, the IP address of the remote copy port 40004 of the remote storage system, and the remote file system ID 40005 of a file system in the remote storage system to which files are copied from the local file system. This table shows information regarding file level copying.

FIG. 5 illustrates the file table 20017 which contains information about all files in the storage system. This table includes a file path 50001, the specified storage class 50002 to store the file, the current storage class 50003 in which the file resides, the block list 50004 which is a list of blocks used to store the file, the state 50005 of the file, the target class 50006 which is the target storage class to migrate the file, and the target block list 50007 which is a list of blocks which will be used to store the migrated file. Thus, during a state of migrating, the target class 50006 indicates the class to which a file is being migrated. A file table 20017 is provided for each file system.

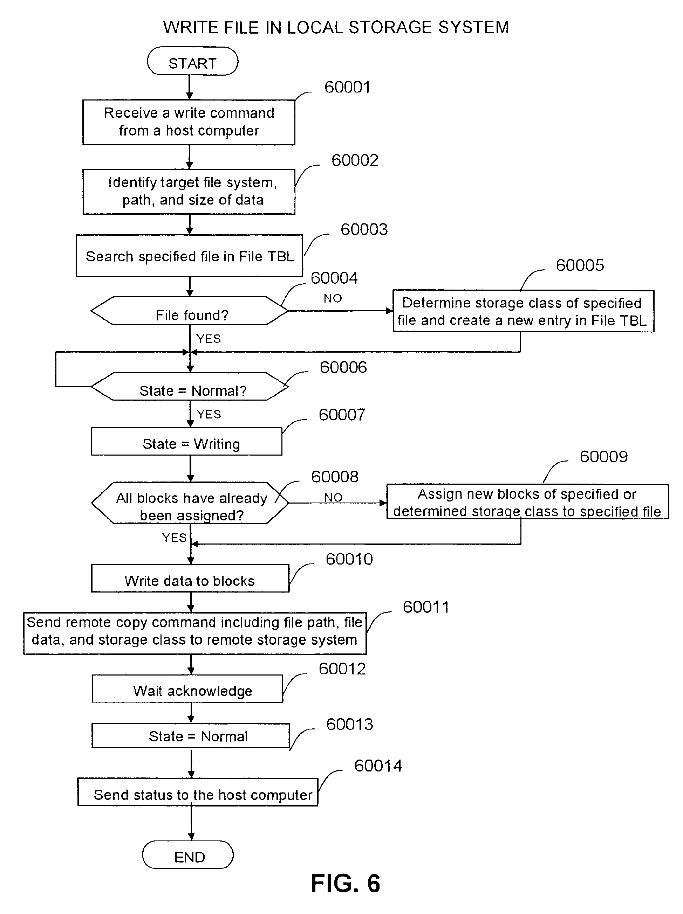

FIG. 6 is a flowchart showing the process performed by the storage control program 20014 for writing a file in the local storage system. Upon receiving a write command from a host computer at step 60001, a target file system is identified which contains a file to be written, along with the path of the file and the size of the data to be written, which are retrieved from the command at step 60002. Next, a file table 20017 of the target file system is searched in order to find the target file (step 60003). If the file is not found (step 60004), it does not exist and is a new file. In this case, at step 60005, the storage class of the new file is determined and a new entry is created in the file table 20017. This storage class can also be determined based upon predefined policy. For example, the policy could be to store every new file in storage class 1. The storage control program 20014 creates a new entry in the file table 20017 and stores the path identified in step 60002 in column 50001 of file table 20017. The determined storage class is stored in column 50002 and "normal" is stored in column 50005 of file table 20017. "N/A" is stored in columns 50006-50007.

Next, in the case that a file is found at step 60004 or if a new entry is created at step 60005, it is determined in step 60006 whether the state of the file is "normal". This is because if the state of the file is "migrating" it cannot be accessed simultaneously. If the state is "normal", the state is changed to "writing" at step 60007. If the file does not have enough blocks to store all of the data sent from the host computer (at step 60008), the storage control program assigns new blocks from the specified storage class in the file system by referring to the block table 20015, and stores the specified storage class into column 50003 of file table 20017 at step 60009. If the specified storage class does not have enough blocks, new blocks are assigned from another storage class and that class is stored in column 50003. The IDs of all the assigned blocks are removed from column 30004 of block table 20015 and added to column 50004 of file table 20017. Then, data is written to the blocks at step 60010. In the case where there was an insufficient number of blocks in the specified storage class, the entire file, including the new data is migrated to the alternate storage class.

In step 60011, the storage control program 20014 sends a remote copy command including file path, data to be written, and storage class to a remote storage system, specifying the IP address of the remote port and ID of the remote file system stored in columns 40004 and 40005, respectively, of file system table 20016. The storage class is sent by the local storage system and used by the remote storage system so that the copied file is arranged in the remote storage system in a manner similar to the local storage system. Upon receiving an acknowledgement from the remote storage system at step 60012, the state of the file is changed to "normal" at step 60015, the status is sent to the host computer in step 60014, and the process ends.

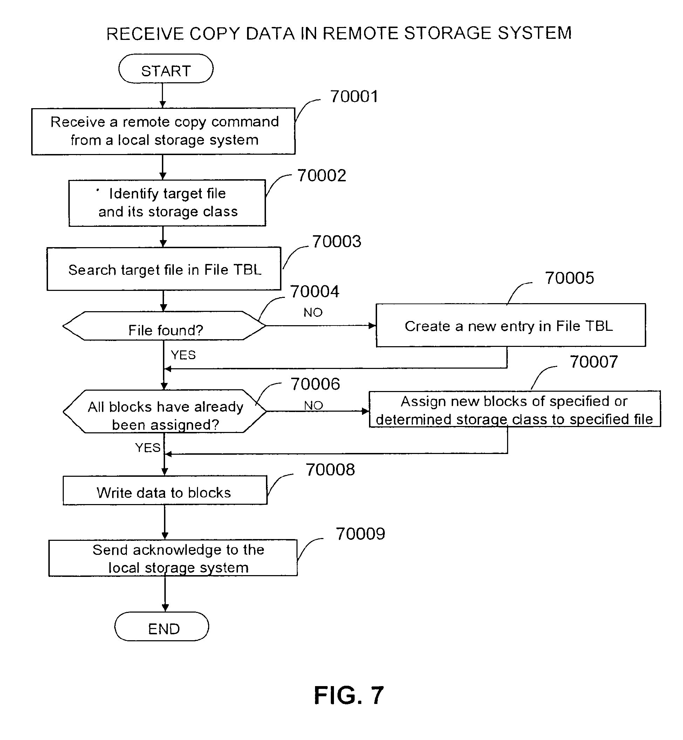

FIG. 7 illustrates how copy data is received in the remote storage system. The storage control program 20014 in the remote storage system 10108 receives a remote copy command from the local storage system at step 70001. Then, the storage control program 20014 retrieves the target file and the storage class of the target file from the command at step 70002. Steps 70003-70005 are similar to steps 60003-60005 described above in FIG. 6, and thus do not need to be re-described. Additionally, steps 70006-70008 are similar to steps 60008-60010 in FIG. 6, and also do not need to be described again here. At step 70009, the storage control program 20014 sends back an acknowledgment to the local storage system. Based on the storage class sent from the local storage system, the copied file is arranged appropriately in the remote storage system.

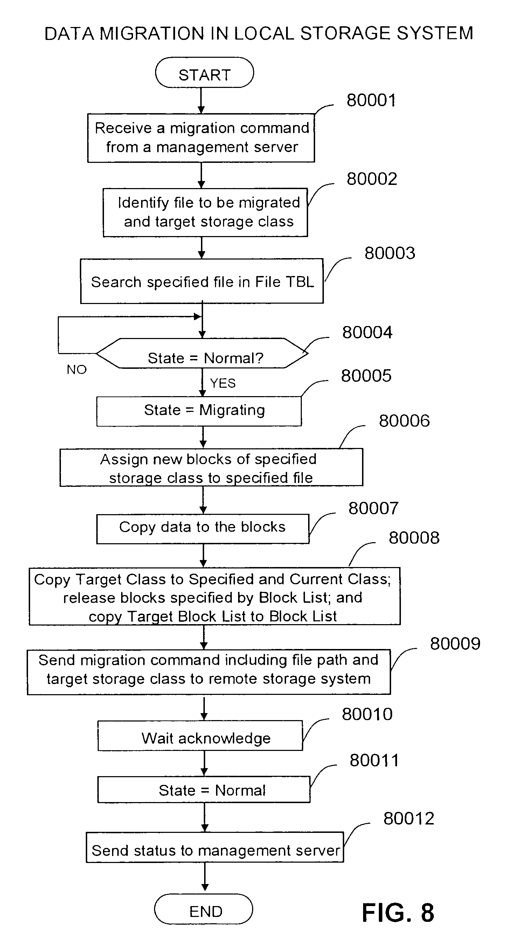

FIG. 8 illustrates a process of data migration in the local storage system. At step 80001, the migration command is received from a management server, which identifies the file system, the file to be migrated, the path of the file and the destination storage class. Further, while a management server is identified in this embodiment as sending the migration command, it should be understood that these commands and other commands may also be received from host computers or other authorized computers in communication with the local storage system. In step 80002, the file system path and storage class are retrieved from the command. At step 80003, the specified file is searched for in the file table 20017 of the specified file system and it is ensured that the state of the file is "normal" (step 80004). If the state is "normal", the storage control program changes the state to "migrating" (step 80005), and assigns new blocks of the specified storage class by looking up column 30004 (step 80006) of block table 20015. If the state is not "normal", this usually indicates that the file is currently being migrated or updated, and the process waits until this is completed. The IDs of the assigned blocks are removed from column 30004 and added to column 50007 of file table 20017. The specified storage class is also stored in column 50006 of file table 20017.

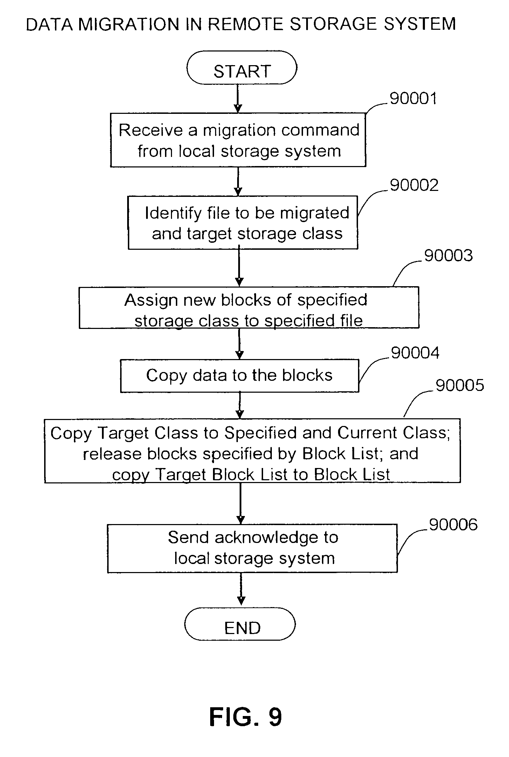

At step 80007, data is copied to the blocks and then column 50006 of file table 20017 is copied to columns 50002 and 50003. Blocks specified by column 50004 are released, namely, IDs stored in column 50004 of file table 20017 are removed and added to column 30004 of block table 20015. Data in column 50007 of file table 20017 is copied to column 50004 and "N/A" is stored at columns 50006 and 50007 of file table 20017 (step 80008). Next, a migration command including the file path and target storage class is sent to the remote storage system, specifying the IP address of the remote port and ID of the remote file system stored in columns 40004 and 40005, respectively, at step 80009. The storage class is sent by the local storage system and is used by the remote storage system so that the copied file is deployed in the remote storage system in a similar manner as the local storage system. The remote storage system carries out the process set forth in FIG. 9, described below, and sends back an acknowledgement. Upon receiving acknowledgment from the remote storage system at step 80010, the state of the file is changed to "normal" (step 80011) and a status of the operation is sent to the management server at step 80012.

FIG. 9 illustrates the data migration in the remote storage system. When the storage control program 20014 in the remote storage system 10108 receives a migration command (step 90001), it retrieves the file path in specified file system and target storage class to which the file should be migrated at step 90002. Steps 90003-90005 are similar to steps 80006-80008 in FIG. 8, and do not need to be described again. Finally, the storage control program sends back an acknowledgement to the local storage system at step 90006. Based on the storage class sent from the local storage system, the copied file can be arranged appropriately in the remote storage system so that the various properties and performance of the file can be provided by the remote storage system just as they would have been provided in the local storage system in the event there is a failure at the local storage system.

### Second Embodiment

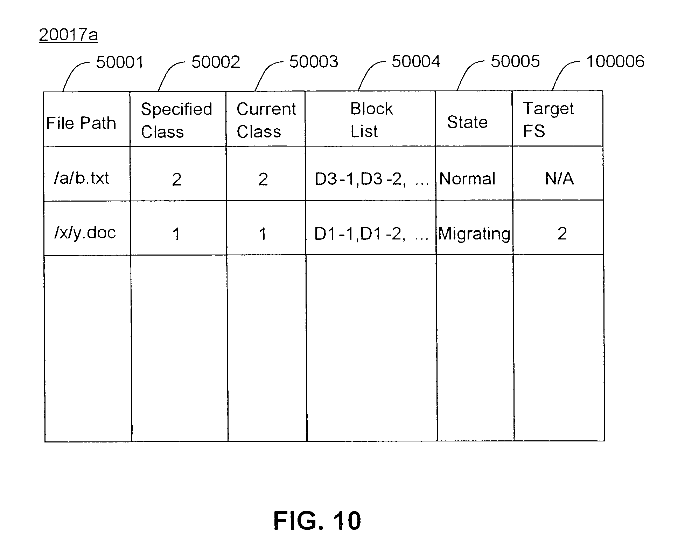

According to the second embodiment of the present invention, one file system only contains one storage class. Therefore, if a file is migrated from one storage class to another, it is moved to another file system. FIG. 10 shows a modified format of the file table for use with the second embodiment as file table 20017a. Columns 50006 and 50007 are replaced by column 100006 which contains IDs of the target file system of migration, while columns 50001-50005 remain as described above with reference to FIG. 5.

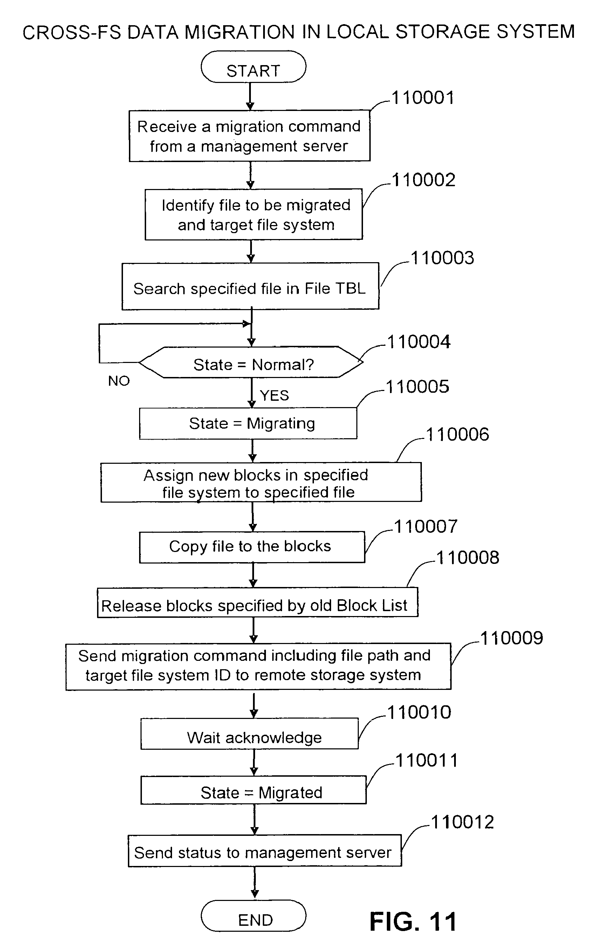

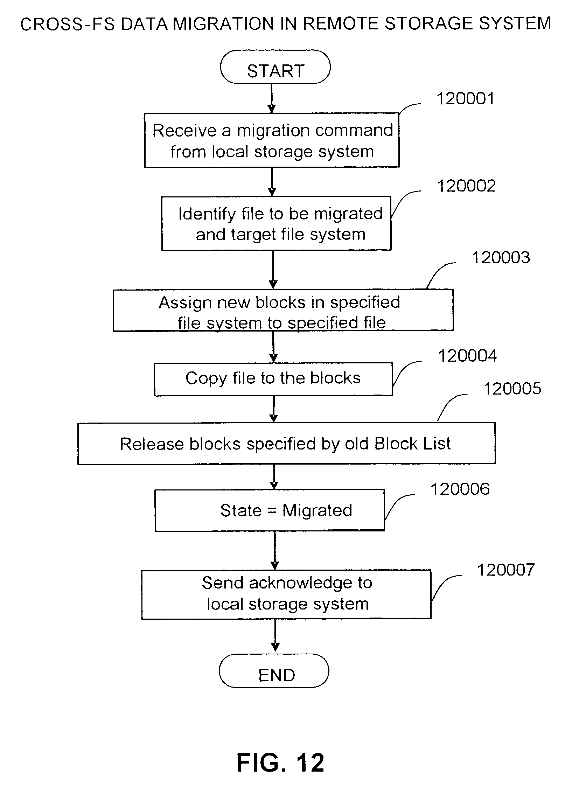

The process flow of the storage control program 20014 in the local storage system 10008 for the second embodiment is shown in FIG. 11. The process in FIG. 11 shows the migration of a file between two file systems. The differences between this figure and FIG. 8 are now described. At step 110001 a migration command is received from the management server including the target file system instead of the target storage class. At step 110002 the file to be migrated is identified, as is the target file system. The specified file is searched for in the file table 20017a at step 110003 and it is determined whether the state of the file is "normal" (step 110004) or "migrating" (step 110005). If the state is not "normal", the process waits until the state becomes "normal", e.g., until a host I/O command or a prior migration command is completed. In step 110006, a new entry is made in the file table 20017a of the target file system and new blocks are assigned in the target file system. At step 110007 the file is copied to the new blocks and at step 110008 blocks specified by an old block list are released. At step 110009 the target file system ID is sent to the remote storage system 10108 as opposed to the remote target storage class. The ID of the remote file system can be determined by looking at column 40005 of file system table 20016 in FIG. 4. The remote storage system 10108 then carries out the steps of FIG. 12 described below and sends acknowledgement back to the local storage system 10008. At step 110010, a wait for acknowledgement is performed and, when acknowledgement is received, at step 110011 the state of the file is changed to "migrated" since the file no longer exists in the original file system anymore. Finally, at step 110012, this status is sent to the management server.

FIG. 12 illustrates the process flow of the storage control program in the remote storage system according to the second embodiment. At step 120001, a migration command is received by the remote storage system 10108 from the local storage system 10008. At step 120002, the ID of the target file system is retrieved instead of the target storage class. Steps 120003 and 120006 are similar to steps 110006 and 110011, respectively, in FIG. 11. At step 120004 the file is copied to the blocks and the blocks specified by the old block list are released at step 120005. Finally, at step 120007, an acknowledgement is sent to the local storage system.

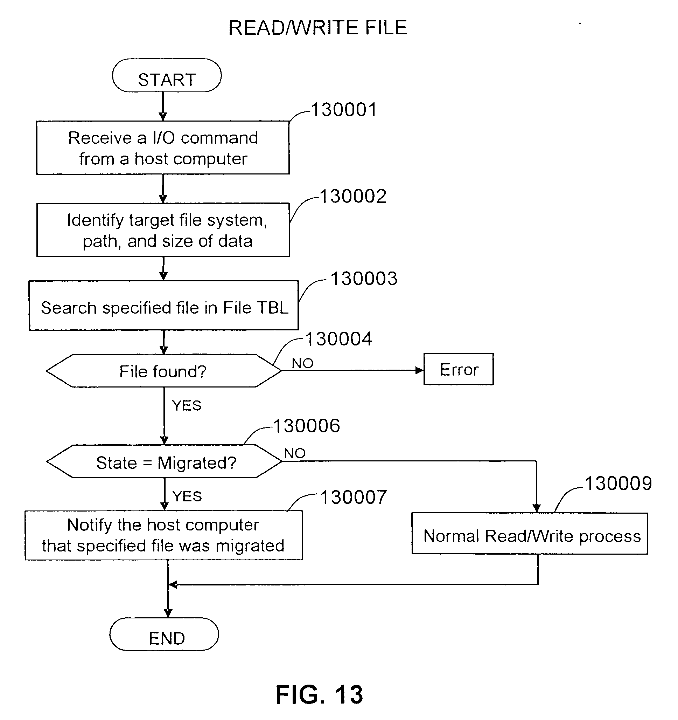

FIG. 13 illustrates how the storage control program 20014 handles a request to access a "migrated" file. If the state of the specified file is "migrated" it notifies the host computer that the specified file was migrated. As shown in FIG. 13, at step 130001 an I/O command is received from a host computer, and a target file system and path of the file are identified at step 130002. At step 130003, the specified file is searched in the file table 20017 or 20017a. If it is found at step 130004, it is determined if its state is migrated (step 130006). If so, the host computer is notified that the file was migrated at step 130007. This may be achieved, for example, using the Network File System (NFS) version 4 migration feature, defined in RFC3530, wherein if a host computer requests a fs_locations attribute, the storage control program can return it by looking up the ID of the target file system (column 100006), searching the ID in column 40001, and returning columns 40002 and 40003 of file system table 20016. If the state of the file is not migrated, then a normal read/write process is performed at step 130009. On the other hand, if a file is not found at step 130004, an error is issued.

While specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the above description has been made in an illustrative fashion, and not a restrictive one. Accordingly, the scope of the invention should properly be determined with reference to the appended claims, along with the full range of equivalents to which such claims are entitled.

## Claims

1. A method of reflecting a hierarchical storage class of a file that is copied from a first storage system to a second storage system comprising the steps of:
copying a file from the first storage system to the second storage system; and
sending class information regarding the file from the first storage system to the second storage system so that the second storage system can store a copy of the file in a hierarchical manner corresponding to how the file is stored in the first storage system.

2. The method according to claim 1, further including the steps of:
migrating the file from one storage area of one class to another storage area of another class in the first storage system; and
sending information regarding this change in class to the second storage system.

3. The method according to claim 2, further including the steps of:
receiving by the second storage system information regarding the change in class of the file; and
migrating, by the second storage system, the copy of the file from one storage area of one class to another storage area of another class in the second storage system, so that the copy of the file is stored in a storage area of a same class in the second storage system as the class in which the file is stored in the first storage system.

4. The method of any one of claims 1 to 3 further including the steps of:
providing fibre channel storage devices as storage devices of a first class; and
providing Serial Advanced Technology Attachment (SATA) storage devices as storage devices of a second class.

5. The method of any one of claims 1 to 4, further including the steps of:
providing each of the first and second storage systems with first storage devices of a first storage class and second storage devices of a second storage class;
receiving a write command from a host computer by the first storage system;
identifying, by the first storage system, a file corresponding to the write command and a storage class for the file;
writing data to the storage devices of the identified storage class.

6. The method of claim 5, further including the steps of:
prior to writing the data to the storage devices of the identified storage class, determining whether the file has sufficient free blocks to store all data sent from the host computer; and
if a determination is made that the file does not have enough free block to store all the data, assigning new blocks from the identified storage class.

7. The method of claim 6, further including the steps of:
if there are insufficient free blocks in the identified storage class, assigning new blocks for the file in a different storage class; and
writing the data to the storage devices of the different storage class instead of to the identified storage class.

8. In a system having a first storage system and a second storage system, each said storage system including first storage devices of a first storage class and second storage devices of a second storage class, a method of accurately reflecting data stored in the first storage system at the second storage system such that when there is a failure at the first storage system, the second storage system can provide properties for files in a manner similar to that provided by the first storage system, the method comprising the steps of:
storing first data in the first storage system in the first storage devices of the first class; and
copying the first data to the first storage devices of the first class in the second storage system as second data.

9. The method according to claim 8, further including the step:
when the first data is migrated from the first storage devices of the first class to the second storage devices of the second class in the first storage system, the second storage system is notified of this migration.

10. The method according to claim 9, further including the step:
when the second storage system is notified of this migration, the second storage system migrates the second data from the first storage devices of the first class to the second storage devices of the second class in the second storage system.

11. The method according to any one of claims 8 to 10, further including the steps of:
providing fibre channel disk drives as the first storage devices; and
providing Serial Advanced Technology Attachment (SATA) disk drives as the second storage devices, or vice versa.

12. The method according to any one of claims 8 to 11, further including the steps of:
providing a first file system and a second file system in each of said first and second storage systems, wherein the first file system is stored in said first storage devices of said first class and said second file system is stored in said second storage devices of said second class.

13. The method according to claim 12, further including the steps of:
migrating said first data from the first storage devices of the first class to the second storage devices of the second class in the first storage system, such that the first data is moved from the first file system to the second file system, and the second storage system is notified of this migration.

14. The method according to claim 13, further including the steps of:
migrating by said second storage system said second data from the first storage devices of the first class to the second storage devices of the second class in the second storage system, such that the second data is moved from the first file system to the second file system in the second storage system.

15. A storage system comprising:
a local storage system storing a plurality of first files of a first storage class and a plurality of second files of a second storage class; and
a remote storage system coupled to the local storage system and storing copies of the plurality of first files and second files,
wherein the copies of the plurality of first files and second files are stored in the remote storage system in the same storage class in which they are stored in the local storage system.

16. The storage system according to claim 15, wherein the local storage system has a management memory storing a table indicating the storage class of each file.

17. The storage system according to claims 15 or 16, wherein after a file is written in the local storage system, a remote copy command including the storage class of the file is sent to the remote storage system.

18. The storage system according to any one of claims 15 to 17:
wherein the local storage system and the remote storage system, each includes first disk devices of a first storage class and second disk devices of a second storage class, different from that of the first storage class;
wherein, upon receiving a first migration command, the local storage system migrates a file from a first location in one or more of said first disk devices of the first storage class to a second location in one or more of said second disk devices of said second storage class;
wherein the local storage system sends a second migration command to the remote storage system, said second migration command including a target storage class; and
the remote storage system migrates a file identified by the second migration command to a target storage class identified by the second migration command.
